# EUROPÄISCHE PATENTSCHRIFT

(11) **EP 3 167 258 B1**
(45) Veröffentlichungstag und Bekanntmachung des Hinweises auf die Patenterteilung: **14.10.2020**
(21) Anmeldenummer: 14735980.6
(22) Anmeldetag: 07.07.2014
(51) Int. Cl.: G01F 25/00, G01S 7/40, G01F 23/284, G01S 13/88

(54) **RADARFÜLLSTANDMESSGERÄT MIT EINER SICHERHEITSEINRICHTUNG**
RADAR LEVEL GAUGE COMPRISING A SAFETY DEVICE
APPAREIL DE MESURE DE NIVEAU PAR RADAR POURVU D'UN DISPOSITIF DE SÉCURITÉ

(43) Veröffentlichungstag der Anmeldung: 17.05.2017
(73) Patentinhaber: VEGA Grieshaber KG, 77709 Wolfach (DE)
(72) Erfinder: HENGSTLER, Clemens, 77716 Haslach (DE)
(74) Vertreter: Patentanwälte Bauer Vorberg Kayser
(86) Internationale Anmeldenummer: PCT/EP2014/064491
(87) Internationale Veröffentlichungsnummer: WO 2016/004976

(56) Entgegenhaltungen:
- EP-A1- 1 751 506
- GB-A- 2 285 131
- GB-A- 2 418 733
- US-B2- 8 009 085

## Beschreibung

Die vorliegende Erfindung betrifft ein Radarfüllstandmessgerät mit einer Sicherheitseinrichtung gemäß dem Oberbegriff des Patentanspruchs 1 oder dem Oberbegriff des Patentanspruchs 2.

Radarfüllstandmessgeräte mit einer solchen Sicherheitseinrichtung sind aus dem Stand der Technik, beispielsweise aus der US 8,009,085 B2, der GB 2 285 131 A, der EP 1 751 506 A1, oder der GB 2 418 733 A bekannt und weisen einen Signalgenerator zur Erzeugung elektromagnetischer Wellen und eine Antenne zum Abstrahlen der elektromagnetischen Wellen in einen Behälter sowie zum Empfangen reflektierter elektromagnetischer Wellen aus dem Behälter auf, wobei die Sicherheitseinrichtung geeignet ausgebildet ist, eine Funktionsfähigkeit des Radarfüllstandmessgerätes zu überprüfen. Die im Stand der Technik gezeigten Sicherheitseinrichtungen weisen dazu einen Reflektor und eine Verstelleinrichtung auf, die geeignet ausgebildet ist, den Reflektor wenigstens zwischen einer ersten Position, in der er die elektromagnetischen Wellen reflektiert, und einer zweiten Position, in der er die elektromagnetischen Wellen reduziert reflektiert, zu verstellen.

Die aus dem Stand der Technik bekannten Radarfüllstandmessgeräte kommen in der Regel in Behältern, die in der Regel als Tanks oder Silos, die zur Aufbewahrung von verschiedenen Materialien ausgebildet sind, zum Einsatz. In solchen Tanks oder Silos werden beispielsweise Lebensmittel, Getränke, Arzneimittel oder Treibstoffe aufbewahrt, sodass eine berührungslose Füllstandmessung notwendig ist. Als berührungslose Füllstandmesstechniken sind im Stand der Technik beispielsweise die erwähnten Radarfüllstandmessgerät oder alternativ ultraschallbasierte Füllstandmessgeräte bekannt. Aufgrund ihrer hohen Messgenauigkeit sowie der geringen Störanfälligkeit sind Radarfüllstandmessgeräte weit verbreitet.

Die aus dem Stand der Technik bekannten Radarfüllstandmessgeräte werden in der Regel über einen Flansch im oberen Bereich eines Tanks oder Silos montiert, wobei eine Elektronik außerhalb und eine Antenne des Radarfüllstandmessgerätes innerhalb des Gehäuses angeordnet ist. Die Antenne ist geeignet ausgerichtet, elektromagnetische Wellen, das heißt insbesondere ein Radarsignal, in Richtung eines Füllgutes, das innerhalb des Behälters aufbewahrt wird, zu senden und von dem Material reflektierte elektromagnetische Wellen zu empfangen. Aufgrund einer Zeitdifferenz zwischen einem Aussenden des elektromagnetischen Signals und dem Empfangen des reflektierten elektromagnetischen Signals kann dann ein Füllstand innerhalb des Behälters bestimmt werden.

Zur Funktionsüberprüfung des Radarfüllstandmessgerätes, insbesondere zur Überprüfung der Funktionsfähigkeit bei einem sicherheitsrelevanten Maximalfüllstand, einem Füllstand, bei dem ein automatisches Schutzsystem eine weitere Befüllung verhindert und gegebenenfalls weiteren relevanten Füllständen ist es notwendig, eine Sicherheitseinrichtung vorzusehen, die eine Aussage über die Funktionsfähigkeit bei diesem Maximalfüllstand erlaubt. Aus dem Stand der Technik ist es hierfür bekannt, bei einem Sicherheitstest einen Reflektor manuell in den Strahlengang des Radarfüllstandmessgerätes zu verbringen, um so auch bei einer geringeren Füllung des Behälters die Funktion des Messgerätes bei dem gewünschten Füllstand zu überprüfen, indem der Reflektor bei diesem Füllstand in den Strahlengang des Radarfüllstandmessgerätes eingebracht und auf diese Weise eine Reflexion bei der gewünschten Füllhöhe erzeugt wird.

An den aus dem Stand der Technik bekannten Radarfüllstandmessgeräten wird es als nachteilig empfunden, dass die bekannten Anordnungen aufgrund ihres mechanischen Aufbaus in der Regel nicht oder nur sehr schwierig gegenüber der Umgebung abdichtbar sind und daher ein Einsatz für toxische und/oder druckbeaufschlagte Substanzen nicht oder nur sehr eingeschränkt möglich ist.

Es ist eine Aufgabe der vorliegenden Erfindung, die aus dem Stand der Technik bekannten Nachteile zu beseitigen und ein weitergebildetes Radarfüllstandsmessgerät sowie eine Sicherheitseinrichtung dafür zur Verfügung zu stellen, die diese Nachteile nicht aufweisen.

Diese Aufgabe wird durch ein Radarfüllstandsmessgerät mit den Merkmalen deines der Patentansprüche 1 und 2 sowie eine Sicherheitseinrichtung mit den Merkmalen des Anspruchs 19 gelöst.

Ein erfindungsgemäßes Radarfüllstandsmessgerät mit einem Signalgenerator zur Erzeugung elektromagnetischer Wellen und einer Antenne zum Abstrahlen der elektromagnetischen Wellen in einen Behälter sowie zum Empfangen reflektierter elektromagnetischer Wellen aus dem Behälter mit einer Sicherheitseinrichtung zum Überprüfen der Funktionsfähigkeit und/oder zum Verbessern der Messqualität des Radarfüllstandmessgerätes weist eine Sicherheitseinrichtung mit einem Reflektor und einer Verstelleinrichtung oder alternativ eine Verstelleinrichtung und einer Reduktionseinrichtung auf, wobei die Sicherheitseinrichtung geeignet ausgebildet ist, den Reflektor und/oder die Reduktionseinrichtung wenigstens zwischen einer ersten Position, in der der Reflektor die elektromagnetischen Wellen reflektiert und einer zweiten Position, in der der Reflektor die elektromagnetischen Wellen reduziert reflektiert, zu verstellen und zeichnet sich dadurch aus, dass die Verstelleinrichtung berührungslos auf den Reflektor und/oder die Reduktionseinrichtung wirkt.

Dadurch, dass die Feststelleinrichtung berührungslos auf den Reflektor und/oder die Reduktionseinrichtung wirkt wird es ermöglicht, dass die Verstelleinrichtung und der Reflektor und/oder die Reduktionseinrichtung voneinander getrennt und insbesondere voneinander abgedichtet in den Behälter eingebracht und betätigt werden können. Durch eine Abdichtung zwischen der Verstelleinrichtung und dem Reflektor und/oder der Reduktionseinrichtung wird es außerdem ermöglicht, dass eine mechanische Durchführung, die eine Bewegung der Verstelleinrichtung von außerhalb des Tanks in den Tank einkoppelt und so auf den Reflektor und/oder die Reduktionseinrichtung einwirkt vermieden wird, so dass insgesamt eine zuverlässige Abdichtung des Behälters/Tanks gegenüber der Umgebung ermöglicht wird.

Eine berührungslose Wirkung der Verstelleinrichtung auf den Reflektor und/oder die Reduktionseinrichtung kann beispielsweise durch eine magnetische Kopplung zwischen der Verstelleinrichtung und dem Reflektor und/oder der Reduktionseinrichtung erreicht werden. Durch eine solche magnetische Kopplung kann eine Bewegung der Verstelleinrichtung einfach und vergleichsweise zuverlässig auf den Reflektor und/oder die Reduktionseinrichtung übertragen werden.

In einer ersten Ausgestaltungsform überträgt die Verstelleinrichtung eine rotatorische Bewegung auf den Reflektor und/oder die Reduktionseinrichtung, so dass insbesondere die magnetischen Kopplungskräfte gering gehalten werden können.

In einer alternativen Ausgestaltungsform überträgt die Verstelleinrichtung eine lineare Bewegung auf den Reflektor und/oder die Reduktionseinrichtung. Durch die Übertragung einer linearen Bewegung kann beispielsweise eine schwerkraftinduzierte Rückstellung der Sicherheitseinrichtung in die zweite Position, in der die Sicherheitseinrichtung die abgestrahlten elektromagnetischen Wellen reduziert oder nicht reflektiert erreicht werden. Es wird auf diese Weise eine Einsatzfähigkeit des Radarfüllstandsmessgerätes auch bei einem Fehler der Sicherheitseinrichtung gewährleistet.

Idealerweise ist die Verstelleinrichtung in einem von einer Messumgebung vorzugsweise druckdicht getrennten Gehäuse angeordnet. Dieses Gehäuse kann beispielsweise mit einem Befestigungsflansch verbunden sein, wobei zwischen dem Gehäuse und dem Flansch vorzugsweise eine Abdichtung, beispielsweise mittels einer Schweißnaht oder anderen Dichtmitteln vorgesehen ist.

Auf diese Weise wird sehr zuverlässig eine Druck- und Diffusionsdichte Trennung der Verstelleinrichtung von der Messumgebung erreicht, wodurch insbesondere ein Einsatz für druckbeaufschlagte und/oder toxische Medien ermöglicht wird.

Vorzugsweise ist die Verstelleinrichtung innerhalb und der Reflektor und/oder die Reduktionseinrichtung außerhalb des Gehäuses angeordnet. Das Gehäuse kann beispielsweise als ein in den Behälter ragender endseitig abgeschlossener Zylinder ausgebildet sein, der mit dem Befestigungsflansch verbunden ist. Durch eine derartige Anordnung kann gleichzeitig eine definierte Ausrichtung der Sicherheitseinrichtung zur Antenne des Radarfüllstandsmessgerätes hergestellt werden, so dass keine zusätzliche Kalibrierung und Ausrichtung notwendig ist. Vorzugsweise ist der Reflektor endseitig an dem Gehäuse angeordnet, so dass eine einfache Wechselwirkung zwischen der Verstelleinrichtung und dem Reflektor und/oder der Reduktionseinrichtung erreicht werden kann.

Die Sicherheitseinrichtung kann beispielsweise derart ausgebildet sein, dass sie ohne Betätigung selbsttätig in die zweite Position übergeht und so auch im Fall eines Defektes, beispielsweise der Verstelleinrichtung, einen Betrieb des Radarfüllstandsmessgerätes sicherstellt.

Eine besonders günstige magnetische Kopplung kann erreicht werden, wenn die Verstelleinrichtung und/oder der Reflektor und/oder die Reduktionseinrichtung wenigstens einen Permanentmagneten aufweist. Durch geeignet ausgebildete Permanentmagneten kann eine gute magnetische Kopplung erreicht werden, die abhängig von der Ausrichtung der Pole der Magneten relativ zueinander durch anziehende und/oder abstoßende Wirkung ein zuverlässiges Umschalten von der ersten Position in die zweite Position und umgekehrt ermöglicht.

Die Reduktionseinrichtung kann beispielsweise als relativ zu dem Reflektor bewegbare Hülse ausgebildet sein, die beispielsweise durch die Verstelleinrichtung senkrecht nach oben gezogen wird und damit den Reflektor freigibt. Der Reflektor kann beispielsweise senkrecht zu einer Hauptabstrahlrichtung der Antenne angeordnet sein und in der zweiten Position von der Hülse vorzugsweise in Radialrichtung überragt werden. Auf diese Weise kann der Reflektor außerdem beispielsweise als Anschlag für die Reduktionseinrichtung ausgebildet sein, so dass eine besonders einfache mechanische Anordnung erreicht wird.

Die Reduktionseinrichtung kann dabei beispielsweise so ausgestaltet sein, dass sie in der zweiten Position die elektromagnetischen Wellen von der Antenne wegreflektiert, so dass relativ zur ersten Position eine Reduktion der reflektierten elektromagnetischen Wellen entsteht.

In einer Weiterbildung der Erfindung kann die Anordnung einen Sensor zur Überwachung der Position des Reflektors und/oder der Reduktionseinrichtung und/oder der Verstelleinrichtung aufweisen, so dass auch eine elektronische Überwachung der Position des Reflektors und/oder der Reduktionseinrichtung ermöglicht wird. Auf diese Weise wird trotz einer räumlichen Trennung der Verstelleinrichtung von dem Reflektor und/oder der Reduktionseinrichtung die Möglichkeit geschaffen, die tatsächlichen Verhältnisse innerhalb des Behälters zu überwachen, so dass eine Information darüber vorliegt, ob die Verstelleinrichtung zuverlässig auf den Reflektor und/oder die Reduktionseinrichtung wirkt.

Zusätzlich zu einem Radarfüllstandsmessgerät mit einer Sicherheitseinrichtung kann auch eine Nachrüstbarkeit der Sicherheitseinrichtung vorgesehen sein. Dementsprechend bezieht sich die vorliegende Erfindung auch auf eine Sicherheitseinrichtung für ein Radarfüllstandsmessgerät mit den oben beschriebenen Merkmalen.

Die vorliegende Erfindung wird nachfolgend unter Bezugnahme auf die beigefügten Figuren eingehend erläutert. Es zeigen:
- Figur 1: eine Prinzipskizze eines Radarfüllstandsmessgerätes mit einer Sicherheitseinrichtung in der ersten Position und
- Figur 2: das Radarfüllstandsmessgerät aus Figur 1 mit einer Sicherheitseinrichtung in der zweiten Position.
- Figur 3: zeigt ein weiteres Ausführungsbeispiel eines Radarfüllstandmessgerätes mit einer Sicherheitseinrichtung mit einem rotierbaren Reflektor in der ersten Position,
- Figur 4: das Radarfüllstandmessgerät aus Figur 3 in der zweiten Position,
- Figur 5: ein Radarfüllstandmessgerät mit einer rotierbar ausgestalteten Reduktionsvorrichtung in der ersten Position und
- Figur 6: das Radarfüllstandmessgerät aus Figur 5 in der zweiten Position.

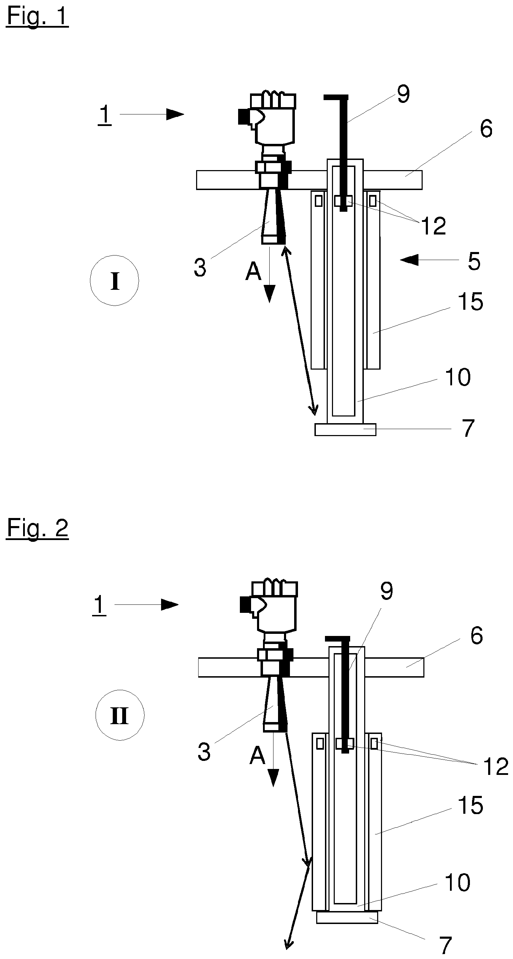

Figur 1 zeigt eine schematische Darstellung eines Radarfüllstandsmessgerätes 1 mit einer Sicherheitseinrichtung 5, wobei sich die Sicherheitseinrichtung 5 in einer ersten Position I, in der ein Reflektor 7 der Sicherheitseinrichtung 5 von einer Antenne 3 des Radarfüllstandsmessgerätes 1 ausgesendete elektromagnetische Wellen reflektiert dargestellt ist. Das Radarfüllstandsmessgerät 1 ist im vorliegenden Ausführungsbeispiel mit einer Antenne 3, die vorliegend als Hornantenne ausgebildet ist, ausgestaltet. Es sind aber auch andere Antennenformen denkbar ohne vom Prinzip der vorliegenden Erfindung abzuweichen.

Die Sicherheitseinrichtung 5 ist im vorliegenden Ausführungsbeispiel als ein zylindrisch ausgebildetes Gehäuse 10 ausgestaltet, an dessen behälterseitigem Ende der Reflektor 7 in einer Ausrichtung senkrecht zu einer Hauptabstrahlrichtung A der Antenne 3 angeordnet ist. Das Gehäuse 10 ist parallel zu dem Radarfüllstandsmessgerät 1 in einem Befestigungsflansch 6 angeordnet und dadurch bereits werkseitig passend zu dem Füllstandmessgerät 1 ausgerichtet. Die Sicherheitseinrichtung 5 weist ferner eine Reduktionseinrichtung 15 auf, die als axial an dem Gehäuse verschiebbare Hülse ausgestaltet ist. An einem flanschseitigen Ende der Reduktionseinrichtung 15 weist diese zwei Permanentmagneten 12 auf, die mit zwei weiteren Permanentmagneten 12, die an einer in dem Gehäuse 10 angeordneten Verstelleinrichtung 9 angeordnet sind, zusammenwirken. Um eine höhere Ausfallsicherheit der Anordnung zu erreichen, könnten auch noch mehrere Magnete über die gesamte Länge verteilt angeordnet werden.

Durch eine magnetische Kopplung zwischen den Permanentmagneten 12 an der Reduktionseinrichtung 15 und der Verstelleinrichtung 9 wird es ermöglicht, die als Hülse ausgestaltete Reduktionseinrichtung 15 entgegen der Schwerkraft von dem endseitig an dem Gehäuse 10 angeordneten Reflektor 7, der vorliegend auch als Anschlag wirkt, abzuheben und diesen so wie in Figur 1 dargestellt, zur Reflexion von der Antenne 3 ausgesendeter elektromagnetischer Wellen freizulegen.Das Gehäuse 10 kann in dieser Ausgestaltungsform umlaufen mit dem Befestigungsflansch 6 verbunden, beispielsweise verschweißt sein, so dass eine druck- und diffusionsdichte Anordnung geschaffen wird. Auf diese Weise kann ein Radarfüllstandsmessgerät 1 mit der in Figur 1 dargestellten Sicherheitseinrichtung 5 auch für toxische und/oder druckbeaufschlagte Medien eingesetzt werden.

Um eine magnetische Kopplung durch das Gehäuse 10 hindurch zu ermöglichen, ist des notwendig, dass dieses zumindest abschnittsweise aus einem nicht magnetischen Material, beispielsweise Edelstahl, besteht.

Eine Betätigung der Verstelleinrichtung 9 kann - was vorliegend nicht näher dargestellt ist - manuell, pneumatisch oder elektrisch betätigbar sein. Insbesondere eine manuelle und pneumatische Betätigung der Verstelleinrichtung 9 wird bevorzugt, da auf diese Weise besonders einfach eine geringe Fehleranfälligkeit der Verstellung erreicht werden kann.

Figur 2 zeigt das Radarfüllstandsmessgerät 1 aus Figur 1 mit Sicherheitseinrichtung 5 in einer zweiten Position II, in der die Reduktionseinrichtung 15 die von ihr von der Antenne 3 ausgesendeten elektromagnetischen Wellen an einer parallel zur Hauptabstrahlrichtung A der Antenne 3 orientierten Fläche reflektiert und damit in Richtung Füllgut ableitet. Im Vergleich zu der in Figur 1 dargestellten ersten Position I wird auf diese Weise eine deutliche Reduktion der Reflektion erreicht, wodurch die Sicherheitseinrichtung 5 im Wesentlichen deaktiviert ist. In der in Figur 2 gezeigten Position ist außerdem deutlich zu erkennen, dass der Reflektor 7 in der vorliegenden Ausgestaltungsform als Anschlag für die Reduktionseinrichtung 15 dient.

Sollte bei dem in den Figuren 1 und 2 dargestellten Ausführungsbeispiel die magnetische Kopplung zwischen der Betätigungsvorrichtung 9 und der Reduktionseinrichtung 15 aus irgendwelchen Gründen nicht zuverlässig arbeiten ist außerdem durch die Wirkung der Schwerkraft sichergestellt, dass die Reduktionseinrichtung 15 selbsttätig in die zweite Position II überführt wird und damit ein regulärer Betrieb des Radarfüllstandsmessgerätes 1 gewährleistet wird.

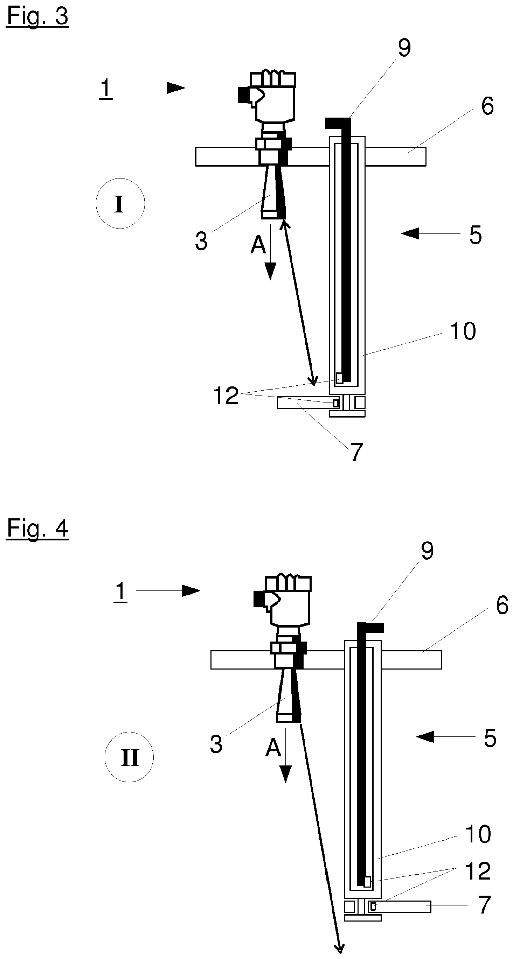

Figur 3 zeigt ein Ausführungsbeispiel eines Radarfüllstandmessgerätes 1 mit einer Sicherheitseinrichtung 5, wobei sich die Sicherheitseinrichtung 5 in der ersten Position I befindet. Ein Überführen aus der ersten Position I in die zweite Position II, die in Figur 4 dargestellt ist, erfolgt auch in diesem Ausführungsbeispiel über eine magnetische Kopplung, die über zwei Permanentmagnete 12 realisiert ist, wobei in diesem Ausführungsbeispiel der Reflektor 7 rotierbar ausgestaltet ist. Wird im vorliegenden Ausführungsbeispiel die Verstelleinrichtung 9 in ihrer Längsachse gedreht, so wird über die Permanentmagneten 12, die einerseits an der Verstelleinrichtung 9 und andererseits an einem Reflektor 7 angeordnet sind, diese Rotationsbewegung auf den Reflektor 7 übertragen, sodass dieser aus der ersten Position 1 in die zweite Position II überführbar ist. Wie den Figuren 3 und 4 entnommen werden kann, ist der Reflektor 7 in der ersten Position I derart angeordnet, dass er von der Antenne 3 ausgesandte elektromagnetische Strahlen reflektiert. In der zweiten Position II ist der Reflektor 7 aus dem Strahlengang der Antenne 3 entfernt, sodass keine Reflektion stattfindet. Wie auch bei dem in den Figuren 1 und 2 dargestellten Ausführungsbeispiel ist hervorzuheben, dass das Gehäuse 10 druck- und diffusionsdicht mit dem Flansch 6 verbunden ist und so die Sicherheitsanordnung vorteilhaft angebracht werden kann.

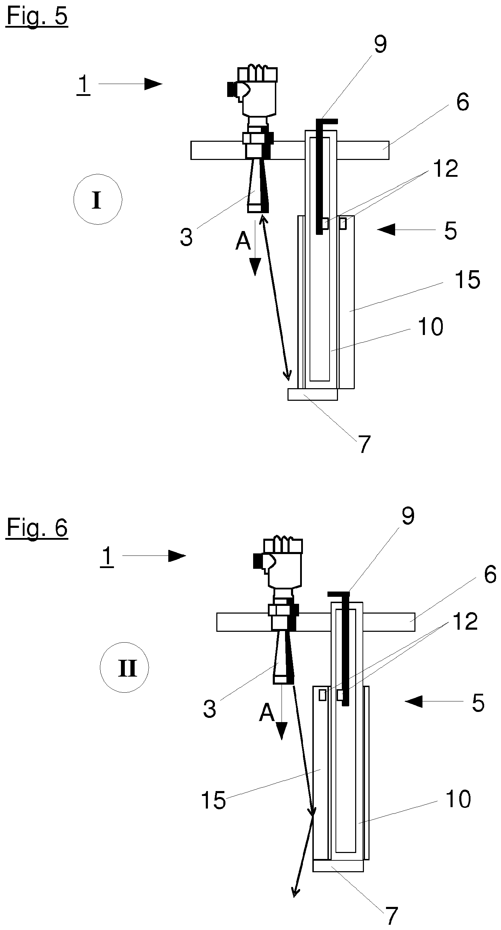

In den Figuren 5 und 6 ist ein weiteres Ausführungsbeispiel eines Radarfüllstandmessgerätes 1 gezeigt, wobei in diesem Ausführungsbeispiel die Reduktionsvorrichtung 15, wie sie auch bei dem ersten Ausführungsbeispiel aus den Figuren 1 und 2 zum Einsatz kommt, asymmetrisch aufgebaut und rotierbar ausgestaltet ist. In der in Figur 5 dargestellten ersten Position ist die Reduktionsvorrichtung 15 derart angeordnet, dass ein Teil des Reflektors 7 freigelegt ist und dadurch eine Reflexion der von der Antenne 3 ausgesandten elektromagnetischen Strahlung erfolgen kann. In der zweiten Position II, die in Figur 6 gezeigt ist, ist die Reduktionsvorrichtung 15 um 180° um ihre Längsachse gedreht angeordnet und verdeckt durch ihre asymmetrische Ausgestaltung den Reflektor 7 aus Sicht der Antenne 3 vollständig, sodass von der Antenne 3 ausgesandte elektromagnetische Strahlung an der Reduktionsvorrichtung 15 reduziert oder, wie in Figur 6 dargestellt in Richtung Füllgut weiter reflektiert wird. Ausschlaggebend ist in jedem Fall, dass ein durch den Reflektor 7 in Richtung der Antenne 3 zurückgeworfenes Signal geringer ausfällt als in ersten Position I.

Wie auch in dem vorangegangenen Ausführungsbeispiel erfolgt eine Kopplung zwischen der Verstelleinrichtung 9 und der Sicherheitseinrichtung 5, in diesem Fall der Reduktionseinrichtung 15 über zwei einerseits an der Verstelleinrichtung 9 und andererseits an der Reduktionseinrichtung 15 angeordnete Permanentmagneten 12. Diese übertragen eine Rotationsbewegung der Verstelleinrichtung 9 auf die Reduktionseinrichtung 15.

### Bezugszeichenliste

- 1: Radarfüllstandmessgerät
- 3: Antenne
- 4: Behälter
- 5: Sicherheitseinrichtung
- 6: Befestigungsflansch
- 7: Reflektor
- 9: Verstelleinrichtung

- 10: Gehäuse
- 12: Permanentmagneten
- 15: Reduktionseinrichtung/Hülse

- A: Abstrahlrichtung
- I: erste Position
- II: zweite Position

## Patentansprüche

1. Radarfüllstandmessgerät (1) mit einem Signalgenerator zur Erzeugung elektromagnetischer Wellen und einer Antenne (3) zum Abstrahlen der elektromagnetischen Wellen sowie zum Empfangen reflektierter elektromagnetischer Wellen, mit einer Sicherheitseinrichtung (5) zum Überprüfen der Funktionsfähigkeit oder zum Verbessern der Messqualität des Radarfüllstandmessgeräts (1), wobei
die Sicherheitseinrichtung (5) einen Reflektor (7) und eine Verstelleinrichtung (9) umfasst und wobei die Verstelleinrichtung (9) geeignet ausgebildet ist, den Reflektor (7) wenigstens zwischen einer ersten Position (I), in der der Reflektor die elektromagnetischen Wellen reflektiert und einer zweiten Position (II), in der der Reflektor die elektromagnetischen Wellen reduziert reflektiert, zu verstellen,
**dadurch gekennzeichnet, dass**
die Verstelleinrichtung (9) berührungslos auf den Reflektor (7) wirkt.

2. Radarfüllstandmessgerät (1) mit einem Signalgenerator zur Erzeugung elektromagnetischer Wellen und einer Antenne (3) zum Abstrahlen der elektromagnetischen Wellen sowie zum Empfangen reflektierter elektromagnetischer Wellen, mit einer Sicherheitseinrichtung (5) zum Überprüfen der Funktionsfähigkeit oder zum Verbessern der Messqualität des Radarfüllstandmessgeräts (1), wobei
die Sicherheitseinrichtung (5) einen Reflektor (7), eine Verstelleinrichtung (9) und eine Reduktionseinrichtung (15) umfasst und wobei die Verstelleinrichtung (9) geeignet ausgebildet ist, den Reflektor (7) und / oder die Reduktionseinrichtung (15) wenigstens zwischen einer ersten Position (I), in der der Reflektor die elektromagnetischen Wellen reflektiert und einer zweiten Position (II), in der der Reflektor die elektromagnetischen Wellen reduziert reflektiert, zu verstellen,
**dadurch gekennzeichnet, dass**
die Verstelleinrichtung (9) berührungslos auf den Reflektor (7) und / oder die Reduktionseinrichtung (15) wirkt.

3. Radarfüllstandmessgerät (1) nach Anspruch 1 oder 2,
**dadurch gekennzeichnet, dass**
die Verstelleinrichtung (9) eine magnetische Kopplung zu dem Reflektor (7) und / oder der Reduktionseinrichtung (15) aufweist.

4. Radarfüllstandmessgerät (1) nach einem der Ansprüche 1 bis 3,
**dadurch gekennzeichnet, dass**
die Verstelleinrichtung(9) den Reflektor (7) und / oder die Reduktionseinrichtung (15) rotatorisch bewegt.

5. Radarfüllstandmessgerät (1) nach einem der Ansprüche 1 bis 3,
**dadurch gekennzeichnet, dass**
die Verstelleinrichtung (9) linear auf den Reflektor (7) und / oder die Reduktionseinrichtung (15) wirkt.

6. Radarfüllstandmessgerät (1) nach einem der vorhergehenden Ansprüche,
**dadurch gekennzeichnet, dass**
die Verstelleinrichtung (9) einen Permanentmagneten (12) aufweist.

7. Radarfüllstandmessgerät (1) nach einem der vorhergehenden Ansprüche,
**dadurch gekennzeichnet, dass**
die Verstelleinrichtung (9) in einem von einer Messumgebung vorzugsweise druckdicht getrennten Gehäuse (10) angeordnet ist.

8. Radarfüllstandmessgerät (1) nach Anspruch 7,
**dadurch gekennzeichnet, dass**
das Gehäuse (10) mit einem Befestigungsflansch (6) verbunden, vorzugsweise verschweißt ist.

9. Radarfüllstandmessgerät (1) nach einem der Ansprüche 7 oder 8,
**dadurch gekennzeichnet, dass**
die Verstelleinrichtung (9) innerhalb und der Reflektor (7) und / oder die Reduktionseinrichtung (15) außerhalb des Gehäuses (10) angeordnet ist.

10. Radarfüllstandmessgerät (1) nach einem der Ansprüche 2 bis 9,
**dadurch gekennzeichnet, dass**
die Sicherheitseinrichtung (5) derart ausgebildet ist, dass die Reduktionseinrichtung (15) durch Wirkung von Schwerkraft selbsttätig in die zweite Position (II) übergeht.

11. Radarfüllstandmessgerät (1) nach einem der vorhergehenden Ansprüche,
**dadurch gekennzeichnet, dass**
die Verstelleinrichtung (9) und / oder der Reflektor (7) und / oder die Reduktionseinrichtung (15) einen Permanentmagneten (12) aufweist.

12. Radarfüllstandmessgerät (1) nach einem der Ansprüche 2 bis 11,
**dadurch gekennzeichnet, dass**
die Reduktionseinrichtung (15) als eine relativ zu dem Reflektor (7) bewegbare Hülse ausgebildet ist.

13. Radarfüllstandmessgerät (1) nach Anspruch 12,
**dadurch gekennzeichnet, dass**
die Hülse den Reflektor (7) in der zweiten Position (II) vorzugsweise in Radialrichtung überragt.

14. Radarfüllstandmessgerät (1) nach Anspruch 13,
**dadurch gekennzeichnet, dass**
der Reflektor (7) als Anschlag für die Reduktionseinrichtung (15) ausgebildet ist.

15. Radarfüllstandmessgerät (1) nach Anspruch 14,
**dadurch gekennzeichnet, dass**
die Reduktionseinrichtung (15) derart ausgebildet ist, dass sie in der zweiten Position (II) die elektromagnetischen Wellen von der Antenne (3) weg reflektiert.

16. Radarfüllstandmessgerät (1) nach einem der vorhergehenden Ansprüche,
**dadurch gekennzeichnet, dass**
die Sicherheitseinrichtung (5) einen Sensor zur Überwachung der Position des Reflektors (7) und / oder der Reduktionseinrichtung (15) aufweist.

17. Radarfüllstandmessgerät (1) nach einem der vorhergehenden Ansprüche,
**dadurch gekennzeichnet, dass**
die Verstelleinrichtung automatisch angetrieben ist.

18. Radarfüllstandmessgerät (1) nach einem der vorhergehenden Ansprüche,
**dadurch gekennzeichnet, dass** die Verstelleinrichtung mit dem Radarfüllstandmessgerät gekoppelt ist.

## Claims

1. A radar level measuring device (1) with a signal generator for generating electromagnetic waves and an antenna (3) for emitting the electromagnetic waves as well as receiving reflected electromagnetic waves, with a safety device (5) for checking the functionality or for improving the measuring quality of the radar level measuring device (1), wherein the safety device (5) comprises a reflector (7) and an adjusting device (9), and wherein the adjusting device (9) is suitably configured for adjusting the reflector (7) at least between a first position (I), in which the reflector reflects the electromagnetic waves, and a second position (II), in which the reflector reflects the electromagnetic waves in a reduced manner,
**characterized in that** the adjusting device (9) acts on the reflector (7) in a contact-free manner.

2. A radar level measuring device (1) with a signal generator for generating electromagnetic waves and an antenna (3) for emitting the electromagnetic waves as well as receiving reflected electromagnetic waves, with a safety device (5) for checking the functionality or for improving the measuring quality of the radar level measuring device (1), wherein the safety device (5) comprises a reflector (7), an adjusting device (9) and a reduction device (15), and wherein the adjusting device (9) is suitably configured for adjusting the reflector (7) and/or the reduction device (15) at least between a first position (I), in which the reflector reflects the electromagnetic waves, and a second position (II), in which the reflector reflects the electromagnetic waves in a reduced manner,
**characterized in that**
the adjusting device (9) acts on the reflector (7) and/or the reduction device (15) in a contact-free manner.

3. The radar level measuring device (1) according to claim 1 or 2,
**characterized in that**
the adjusting device (9) has a magnetic coupling with the reflector (7) and/or the reduction device (15).

4. The radar level measuring device (1) according to any one of the claims 1 to 3,
**characterized in that**
the adjusting device (9) moves the reflector (7) and/or the reduction device (15) in a rotational manner.

5. The radar level measuring device (1) according to any one of the claims 1 to 3,
**characterized in that**
the adjusting device (9) acts on the reflector (7) and/or the reduction device (15) in a linear manner.

6. The radar level measuring device (1) according to any one of the preceding claims,
**characterized in that**
the adjusting device (9) has a permanent magnet (12).

7. The radar level measuring device (1) according to any one of the preceding claims,
**characterized in that**
the adjusting device (9) is disposed in a housing (10) that is separated from a measuring environment preferably in a pressure-tight manner.

8. The radar level measuring device (1) according to claim 7,
**characterized in that**
the housing (10) is connected, preferably welded, to a fastening flange (6).

9. The radar level measuring device (1) according to any one of the claims 7 or 8,
**characterized in that**
the adjusting device (9) is disposed within the housing (10), and the reflector (7) and/or the reduction device (15) outside thereof.

10. The radar level measuring device (1) according to any one of the claims 2 to 9,
**characterized in that**
the safety device (5) is configured in such a way that the reduction device (15) automatically shifts into the second position (II) due to the effect of gravity.

11. The radar level measuring device (1) according to any one of the preceding claims,
**characterized in that**
the adjusting device (9) and/or the reflector (7) and/or the reduction device (15) have a permanent magnet (12).

12. The radar level measuring device (1) according to any one of the claims 2 to 11,
**characterized in that**
the reduction device (15) is configured as a sleeve that can be moved relative to the reflector (7).

13. The radar level measuring device (1) according to claim 12,
**characterized in that**
the sleeve protrudes over the reflector (7) in the second position (II), preferably in the radial direction.

14. The radar level measuring device (1) according to claim 13,
**characterized in that**
the reflector (7) is configured as a stop for the reduction device (15).

15. The radar level measuring device (1) according to claim 14,
**characterized in that**
the reduction device (15) is configured in such a way that it reflects the electromagnetic waves away from the antenna (3) in the second position (II).

16. The radar level measuring device (1) according to any one of the preceding claims,
**characterized in that**
the safety device (5) has a sensor for monitoring the position of the reflector (7) and/or the reduction device (15).

17. The radar level measuring device (1) according to any one of the preceding claims,
**characterized in that**
the adjusting device is driven automatically.

18. The radar level measuring device (1) according to any one of the preceding claims,
**characterized in that**
the adjusting device is coupled with the radar level measuring device.

## Revendications

1. Dispositif de mesure de niveau de remplissage par radar (1) comprenant un générateur de signaux pour générer des ondes électromagnétiques ainsi qu'une antenne (3) pour émettre les ondes électromagnétiques et pour recevoir des ondes électromagnétiques réfléchies, un dispositif de sécurité (5) pour vérifier la capacité de fonctionnement ou pour améliorer la qualité de mesure du dispositif de mesure de niveau de remplissage par radar (1), dans lequel ledit dispositif de sécurité (5) comprend un réflecteur (7) et un dispositif de réglage (9) et dans lequel le dispositif de réglage (9) est conçu de manière appropriée pour régler le réflecteur (7) au moins entre une première position (I) dans laquelle le réflecteur réfléchit les ondes électromagnétiques et une deuxième position (II) dans laquelle le réflecteur réfléchit de manière réduite les ondes électromagnétiques, **caractérisé par le fait que** ledit dispositif de réglage (9) agit sans contact sur le réflecteur (7).

2. Dispositif de mesure de niveau de remplissage par radar (1), comprenant un générateur de signaux pour générer des ondes électromagnétiques ainsi qu'une antenne (3) pour émettre des ondes électromagnétiques et pour recevoir des ondes électromagnétiques réfléchies, un dispositif de sécurité (5) pour vérifier la capacité de fonctionnement ou pour améliorer la qualité de mesure du dispositif de mesure de niveau de remplissage par radar (1), dans lequel ledit dispositif de sécurité (5) comprend un réflecteur (7), un dispositif de réglage (9) et un dispositif de réduction (15) et dans lequel ledit dispositif de réglage (9) est conçu de manière appropriée pour régler le réflecteur (7) et/ou le dispositif de réduction (15) au moins entre une première position (I) dans laquelle le réflecteur réfléchit les ondes électromagnétiques et une deuxième position (II) dans laquelle le réflecteur réfléchit de manière réduite les ondes électromagnétiques, **caractérisé par le fait que** le dispositif de réglage (9) agit sans contact sur le réflecteur (7) et/ou le dispositif de réduction (15).

3. Dispositif de mesure de niveau de remplissage par radar (1) selon la revendication 1 ou 2, **caractérisé par le fait que** le dispositif de réglage (9) présente un couplage magnétique au réflecteur (7) et/ou au dispositif de réduction (15).

4. Dispositif de mesure de niveau de remplissage par radar (1) selon l'une quelconque des revendications 1 à 3, **caractérisé par le fait que** le dispositif de réglage (9) fait tourner le réflecteur (7) et/ou le dispositif de réduction (15).

5. Dispositif de mesure de niveau de remplissage par radar (1) selon l'une quelconque des revendications 1 à 3, **caractérisé par le fait que** le dispositif de réglage (9) agit de façon linéaire sur le réflecteur (7) et/ou le dispositif de réduction (15).

6. Dispositif de mesure de niveau de remplissage par radar (1) selon l'une quelconque des revendications précédentes, **caractérisé par le fait que** le dispositif de réglage (9) présente un aimant permanent (12).

7. Dispositif de mesure de niveau de remplissage par radar (1) selon l'une quelconque des revendications précédentes, **caractérisé par le fait que** le dispositif de réglage (9) est disposé à l'intérieur d'un boîtier (10) qui, de préférence, est séparé de manière étanche à la pression d'un environnement de mesure.

8. Dispositif de mesure de niveau de remplissage par radar (1) selon la revendication 7, **caractérisé par le fait que** le boîtier (10) est relié, de préférence soudé, à une bride de fixation (6).

9. Dispositif de mesure de niveau de remplissage par radar (1) selon l'une quelconque des revendications 7 ou 8, **caractérisé par le fait que** le dispositif de réglage (9) est disposé à l'intérieur et le réflecteur (7) et/ou le dispositif de réduction (15) est disposé à l'extérieur du boîtier (10).

10. Dispositif de mesure de niveau de remplissage par radar (1) selon l'une quelconque des revendications 2 à 9, **caractérisé par le fait que** le dispositif de sécurité (5) est conçu de telle sorte que le dispositif de réduction (15) passe automatiquement par l'action de la gravité à la deuxième position (II).

11. Dispositif de mesure de niveau de remplissage par radar (1) selon l'une quelconque des revendications précédentes, **caractérisé par le fait que** le dispositif de réglage (9) et/ou le réflecteur (7) et/ou le dispositif de réduction (15) comprend un aimant permanent (12).

12. Dispositif de mesure de niveau de remplissage par radar (1) selon l'une quelconque des revendications 2 à 11, **caractérisé par le fait que** le dispositif de réduction (15) est réalisé sous la forme d'une douille déplaçable par rapport au réflecteur (7).

13. Dispositif de mesure de niveau de remplissage par radar (1) selon la revendication 12, **caractérisé par le fait que** ladite douille dépasse le réflecteur (7) dans la deuxième position (II) de préférence dans la direction radiale.

14. Dispositif de mesure de niveau de remplissage par radar (1) selon la revendication 13, **caractérisé par le fait que** le réflecteur (7) est conçu en tant que butée pour le dispositif de réduction (15).

15. Dispositif de mesure de niveau de remplissage par radar (1) selon la revendication 14, **caractérisé par le fait que** le dispositif de réduction (15) est conçu de telle sorte que, dans la deuxième position (II), il réfléchit les ondes électromagnétiques dans la direction opposée à l'antenne (3).

16. Dispositif de mesure de niveau de remplissage par radar (1) selon l'une quelconque des revendications précédentes, **caractérisé par le fait que** le dispositif de sécurité (5) comprend un capteur de surveillance de la position du réflecteur (7) et/ou du dispositif de réduction (15).

17. Dispositif de mesure de niveau de remplissage par radar (1) selon l'une quelconque des revendications précédentes, **caractérisé par le fait que** le dispositif de réglage est entraîné automatiquement.

18. Dispositif de mesure de niveau de remplissage par radar (1) selon l'une quelconque des revendications précédentes, **caractérisé par le fait que** le dispositif de réglage est couplé au dispositif de mesure de niveau de remplissage par radar.
